# DEMANDE DE BREVET EUROPEEN

(11) **EP 1 279 885 A1**
(43) Date de publication de la demande: **29.01.2003**
(21) Numéro de dépôt: 02291882.5
(22) Date de dépôt: 25.07.2002
(51) Int. Cl.: F17C 3/02, F16L 59/02, F17C 3/04, F17C 13/00

(54) **Procédé d'isolation thermique d'une structure metallique dont les deux faces sont soumises à des températures cryogéniques**

(30) Priorité: 27.07.2001 FR 0110082
(71) Demandeur: Cryospace l'air liquide aerospatiale, 78133 Les Mureaux Cédex (FR)
(72) Inventeur: Cargnello, Rémo, 78130 Les Mureaux (FR); Damas, Alain, 78670 Villennes sur Seine (FR); Leleux, Joel, 78640 Villiers Saint Frédéric (FR)
(74) Mandataire: Ilgart, Jean-Christophe

(57) **Abrégé**

Procédé d'isolation thermique d'une structure métallique (10) dont les deux faces sont soumises à des températures cryogéniques.

Selon ce procédé, on applique tout d'abord un film d'adhésif (12) sur l'une des faces de la structure (10). On projette ensuite une mousse de polyuréthanne (12) sur cet adhésif, avant la polymérisation de celui-ci. Le film d'adhésif peut être appliqué soit par projection, éventuellement au travers d'un pochoir, soit à l'aide d'une spatule, de façon à obtenir un film d'épaisseur comprise entre environ 50 microns et 150 microns. Les projections s'effectuent sous une atmosphère dont la température est régulée à 20°C±3°C et l'hygrométrie à moins de 60%.

## Description

### Domaine technique

L'invention concerne un procédé conçu pour assurer l'isolation thermique d'une structure métallique dont les deux faces sont soumises à des températures cryogéniques.

Dans l'ensemble du texte, l'expression "températures cryogéniques" doit être comprise comme désignant des températures très basses, telles que celles de l'oxygène liquide (90 K) et de l'hydrogène liquide (20 K).

L'invention s'applique notamment à l'isolation thermique d'un fond commun à deux réservoirs contenant des fluides cryogéniques tels que de l'hydrogène et de l'oxygène en phases liquides. En particulier, une application privilégiée de l'invention concerne l'isolation thermique de réservoirs appartenant à des véhicules ou à des engins utilisés dans les domaines aéronautique et spatial.

### Etat de la technique

Pour assurer l'isolation thermique des structures métalliques à usage cryogénique, plusieurs techniques sont actuellement utilisées. Le choix entre ces techniques est différent selon que ces structures présentent une ou deux faces soumises à des températures cryogéniques.

Dans le cas de structures isolées soumises à des températures cryogéniques, telles qu'un réservoir contenant deux ergols séparés par un fond commun, l'isolation thermique est généralement obtenue en réalisant ledit fond sous la forme d'une double paroi métallique dans laquelle on fait le vide.

Ce type d'isolation permet d'éviter le refroidissement par conduction et donc la solidification de l'ergol le moins froid, par exemple de l'oxygène liquide, dus à la température plus basse de l'autre ergol, par exemple de l'hydrogène liquide, contenu dans l'autre compartiment du réservoir.

Une deuxième technique connue d'isolation thermique consiste à isoler le fond commun aux deux réservoirs au moyen d'un voile en tissu de verre enduit de polytétrafluoréthylène ou PTFE. Dans le cas où les ergols contenus dans le réservoir sont de l'hydrogène et de l'oxygène, on colle ledit voile du côté de l'hydrogène, si les matériaux qui les constituent supportent les très basses températures allant jusqu'à 20 K. En effet, le voile est incompatible avec l'oxygène liquide, notamment en raison d'un risque d'inflammation.

Cette deuxième technique connue d'isolation présente l'avantage d'être étanche au liquide (hydrogène) sous un faible gradient de pression. En outre, le voile est perméable au gaz de vaporisation, de telle sorte qu'un matelas de gaz isolant d'environ 25 mm d'épaisseur est formé entre le voile et le fond commun du réservoir.

Pour des raisons économiques, cette deuxième technique connue d'isolation thermique est progressivement remplacée par une troisième technique connue, qui consiste à coller des panneaux thermiquement isolants sur les surfaces à protéger. En effet, une calotte dont les dimensions correspondent à environ 50% de la surface du fond commun suffit à assurer l'isolation thermique désirée.

Les panneaux isolants sont généralement réalisés dans une mousse à cellules fermées de type polychlorure de vinyle. La calotte est obtenue en juxtaposant des secteurs de panneaux isolants, préalablement découpés à la forme souhaitée.

Pour les mêmes raisons que lorsque l'isolation est obtenue au moyen d'un voile, dans le cas où les ergols contenus dans le réservoir sont de l'hydrogène et de l'oxygène, on colle les panneaux isolants du côté de l'hydrogène, si les matériaux qui les constituent supportent les très basses températures allant jusqu'à 20 K.

Lorsque cette troisième technique connue est utilisée, l'épaisseur des panneaux isolants est de l'ordre de 10 mm. Quand le réservoir est utilisé comme moteur pour la propulsion d'un véhicule ou d'un engin, cette épaisseur garantit le respect du domaine fonctionnel de la propulsion.

Après le collage des panneaux thermiquement isolants sur le fond commun, un revêtement primaire de colmatage doit impérativement être appliqué sur lesdits panneaux, pour éviter la pollution de l'ergol par le matériau qui les constitue.

Si, pour des raisons économiques, l'utilisation de panneaux thermiquement isolants est préférée à celle d'un voile en tissu de verre enduit de PTFE, le recours à des panneaux thermiquement isolants reste d'une mise en oeuvre complexe et coûteuse. En effet, sans rentrer dans le détail de la gamme opératoire, il est rappelé que cette mise en oeuvre impose les phases opératoires suivantes :
- découpe des panneaux thermiquement isolants par secteurs, de manière à former une calotte ;
- mise en forme desdits panneaux afin qu'ils épousent sans contrainte le fond du réservoir ;
- traitement de surface du fond du réservoir, avant la projection d'un revêtement primaire destiné à assurer une bonne adhérence de l'adhésif utilisé pour coller panneaux ;
- utilisation d'un tissu de verre pour l'encollage des panneaux, afin de remédier aux efforts de pelage aux basses températures ;
- utilisation d'un sac à vide ou d'un moyen de pression pour maintenir les panneaux contre le fond pendant toute la phase de polymérisation de la colle ; et
- application d'un revêtement primaire de colmatage des cellules à nature fermée du matériau, indispensable pour remédier aux risques de pollution engendrés par la perte de nombreuses particules dudit matériau.

En conclusion, il apparaît qu'aucune des techniques utilisées à ce jour pour assurer l'isolation thermique de structures métalliques dont les deux faces sont soumises à des températures cryogéniques n'est réellement satisfaisante.

### Exposé de l'invention

L'invention a précisément pour objet un procédé d'isolation thermique d'une structure métallique dont les deux faces sont soumises à une température cryogénique, la conception originale dudit procédé lui permettant d'envisager une production en série à un coût industriel raisonnable, tout en procurant les qualités d'isolation requises.

Conformément à l'invention, ce résultat est obtenu en mettant en oeuvre un procédé d'isolation thermique d'une structure métallique présentant deux faces opposées prévues pour être soumises à des températures cryogéniques, caractérisé en ce qu'on applique un film d'adhésif sur l'une desdites faces de la structure métallique, sur une épaisseur comprise entre environ 50 microns et environ 150 microns, puis on projette une mousse de polyuréthanne sur cet adhésif, avant la polymérisation de celui-ci.

La mise en place d'un adhésif avant la projection de la mousse de polyuréthanne permet d'assurer une forte adhérence de la protection thermique sur la structure. Cette adhérence permet d'éviter la fissuration de la couche de mousse isolante jusqu'à la structure, malgré la fragilisation de ladite couche à basse température.

Contrairement aux règles de l'art, la projection de la mousse isolante s'effectue avant la polymérisation et, plus précisément, avant le début de gel de l'adhésif, ce qui correspond à la fin de durée de vie en pot de celui-ci. Cette caractéristique permet de réaliser un cycle d'industrialisation sans attente. Elle permet aussi de mettre en place la mousse isolante sans avoir recours à un sac à vide, à un système de mise en pression de ladite mousse ou à un quelconque tissu d'imprégnation tel qu'un tissu en fibres de verre.

Il est à noter que l'application de l'adhésif ne nécessite pas au préalable la pose d'un revêtement primaire sur la surface de la structure à protéger, contrairement à ce qui est généralement obligatoire lorsqu'on désire obtenir l'adhérence d'une isolation sur une structure métallique.

Il est à noter également que l'utilisation d'une mousse de polyuréthanne ne nécessite pas, après polymérisation, l'application d'une couche primaire de colmatage, pour remédier aux risques de pollution engendrés par la perte de nombreuses particules des panneaux thermiquement isolants actuellement utilisés. En effet, la mousse projetée forme une croûte en surface, lors de sa polymérisation. Cette croûte est plus dure et ne génère pas de pollution.

Dans un mode de réalisation préféré de l'invention, on obtient l'adhésif en mélangeant un polyol et un isocyanate. Ce mode de mise en oeuvre permet d'optimiser la compatibilité de la nature chimique de l'adhésif avec celle de la mousse en polyuréthanne, celle-ci étant également constituée en mélangeant un polyol et un isocyanate. En effet, on tire ainsi pleinement profit du fait que la polymérisation de l'adhésif s'effectue en même temps que celle de la mousse isolante. Ce choix préférentiel de compatibilité chimique de l'adhésif et de la mousse évite une baisse des caractéristiques mécaniques de l'isolation thermique à l'interface entre ces deux composants, qui faciliterait l'effet de pelage au niveau de l'adhésif.

Le film d'adhésif obtenu doit être mince, pour éviter un délaminage de l'isolation au niveau de l'interface de collage. C'est pourquoi, l'épaisseur du film d'adhésif projeté sur la structure est comprise entre environ 50 microns et environ 150 microns, l'épaisseur optimale étant d'environ 100 microns.

Avantageusement, on projette la mousse de polyuréthanne de façon à obtenir une couche d'épaisseur comprise entre environ 10 mm et 15 mm. Cette couche isolante est projetée, en une ou deux étapes, grâce à l'application préliminaire de l'adhésif. En effet, celui-ci remplace avantageusement l'application d'une première couche de mousse de polyuréthanne, dite "couche d'accrochage", et permet d'obtenir une isolation thermique efficace sans qu'il soit nécessaire de procéder à un chauffage du support métallique.

L'adhésif peut être appliqué sur la structure métallique à isoler soit, de préférence, par projection, soit au moyen d'une spatule, suivant la taille et la forme de ladite structure. Lorsque l'adhésif est projeté sur la structure à protéger, la projection peut se faire au travers d'un pochoir.

Pour optimiser les caractéristiques de la mousse et, éventuellement, de l'adhésif lorsque ce dernier fait partie de la famille des polyuréthannes et est mis en place par projection, les projections sont faites sous une atmosphère dont la température est régulée à 20°C±3°C. Pour la même raison, l'hygrométrie de l'atmosphère dans laquelle s'effectuent les projections est avantageusement régulée à moins de 60%. Lors de la projection de la mousse, la structure à protéger peut être orientée soit horizontalement, soit verticalement.

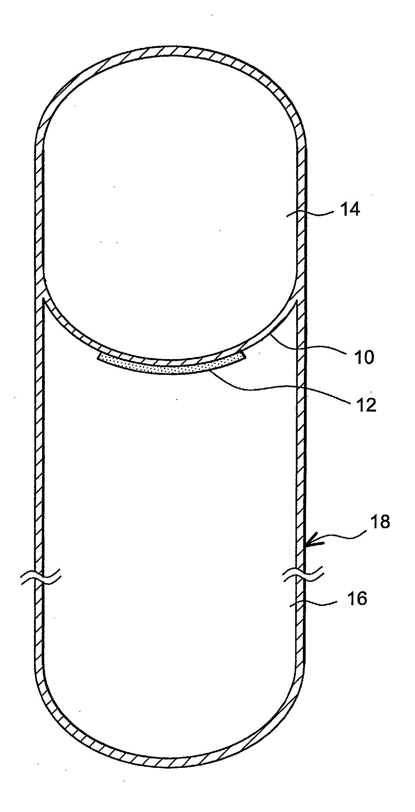

### Brève description du dessin

On décrira à présent, à titre d'exemple illustratif et nullement limitatif, une forme préférée de mise en oeuvre du procédé selon l'invention, en se référant au dessin annexé, dans lequel la figure unique est une vue d'ensemble qui représente schématiquement un réservoir apte à contenir deux fluides cryogéniques différents, séparés par un fond commun revêtu partiellement d'une isolation thermique mise en place par le procédé selon l'invention.

### Description détaillée d'une forme préférée de mise en oeuvre de l'invention

La description qui va suivre, faite en référence à la figure unique, se rapporte à une application préférée de l'invention. Cette application concerne la réalisation de l'isolation thermique 12 d'un fond commun 10 assurant la séparation entre deux ergols 14 et 16 à l'intérieur d'un réservoir cryotechnique principal 18 d'un lanceur tel que le lanceur Ariane 5. Plus précisément, les deux ergols 14 et 16 sont respectivement de l'oxygène liquide à la température de 90 K et de l'hydrogène liquide à la température de 20 K. Le réservoir 18 ainsi que son fond commun 10 sont réalisés en tôles métalliques.

Avant de décrire en détail cette application préférée du procédé selon l'invention, il est rappelé que celle-ci ne doit en aucun cas être considérée comme limitative de la portée de l'invention. En effet, l'invention peut être utilisée dans tous les cas où l'on désire assurer l'isolation thermique d'une structure métallique quelconque dont les deux faces sont soumises à des températures cryogéniques.

Dans un premier temps, on prépare la surface du fond commun 10 que l'on désire protéger thermiquement, c'est-à-dire au moins la partie centrale de la face du fond 10 prévue pour être en contact avec l'hydrogène liquide 16.

Cette préparation de surface a pour objet de donner à ladite surface une tension superficielle suffisante pour assurer une adhérence optimale de l'adhésif. Elle peut prendre différentes formes bien connues de l'homme du métier. Ainsi, elle consiste généralement en une opération de dégraissage alcalin, suivie d'un rinçage à l'eau déminéralisée ou d'émerisage à l'aide d'un abrasif de grade fin, ou encore de sablage au corindon de faible granulométrie, pour éviter de dégrader la structure métallique.

Lorsque certaines parties de la structure métallique à protéger, telles que des inserts ou autres, ne doivent pas être recouvertes d'isolation thermique, on place au préalable des éléments de masquage sur les emplacements correspondants de ladite structure.

Dans un délai aussi court que possible (généralement moins de 8 heures) afin d'éviter une nouvelle pollution de la surface, l'étape de préparation de ladite surface est suivie d'une étape d'application d'un adhésif sur celle-ci.

L'adhésif est avantageusement un polyuréthanne constitué d'un polyol et d'un isocyanate. Il est choisi d'une part pour sa durée de vie en pot et d'autre part de façon à pouvoir conserver ses propriétés jusqu'à une température cryogénique d'environ 20 K.

L'application de l'adhésif s'effectue de préférence par projection. Le réservoir 18 est alors positionné sur des vireurs, afin que le fond commun 10 soit orienté verticalement. Lorsque l'adhésif est projeté sur une structure suspendue, la projection est faite au travers d'un pochoir (fine grille), afin de permettre l'accrochage de l'isolation sur le support à certains emplacements. En variante, l'application de l'adhésif peut aussi être faite à l'aide d'une spatule, suivant la taille et la forme de la structure à protéger.

L'épaisseur du film d'adhésif ou de colle ainsi obtenue est avantageusement comprise entre environ 50 microns et environ 150 microns. L'épaisseur optimale est d'environ 100 microns.

On projette ensuite sur la surface ainsi préparée et revêtue d'adhésif une couche de mousse polyuréthanne. Cette projection s'effectue avant la polymérisation de l'adhésif et, plus précisément, avant le début de gel de l'adhésif ou, en d'autres termes, avant la fin du temps d'ouverture de l'adhésif. Dans l'application décrite, cela correspond à un délai inférieur à 150 minutes.

La projection de la mousse polyuréthane s'effectue sous une atmosphère dont la température est régulée à 20°C±3°C, avec une hygrométrie inférieure à 60%.

Les machines destinées à assurer la projection de l'adhésif, puis de la mousse sont préparées et réglées au préalable avec un certain nombre de paramètres, afin de respecter au mieux les conditions opératoires requises pour obtenir la qualité de mousse désirée (masse volumique inférieure à 80 Kg/m³).

Lorsque l'isolation a été déposée sur la structure, on mesure l'épaisseur de la couche déposée, afin de la contrôler. Cette mesure peut être faite à l'aide de tout moyen de mesure non destructif tel qu'un capteur à courant de Foucault ou similaire.

Dans la forme préférée de mise en oeuvre de l'invention, l'épaisseur de la couche de mousse isolante est comprise entre environ 10 mm et environ 15 mm. Si la mesure d'épaisseur révèle qu'une deuxième couche de mousse doit être déposée, l'application d'un nouveau film d'adhésif n'est pas indispensable. Toutefois, la présence d'un tel film améliore considérablement l'adhérence entre les deux couches de mousse.

Afin d'assurer l'adhérence de la mousse isolante après sa projection, la structure à isoler thermiquement ne doit pas être manipulée tant que l'adhésif n'est pas polymérisé.

## Revendications

1. Procédé d'isolation thermique d'une structure métallique présentant deux faces opposées prévues pour être soumises à des températures cryogéniques, **caractérisé en ce qu'**on applique un film d'adhésif sur l'une desdites faces de la structure métallique, sur une épaisseur comprise entre environ 50 microns et environ 150 microns, puis on projette une mousse de polyuréthanne sur cet adhésif, avant la polymérisation de celui-ci.

2. Procédé d'isolation thermique selon la revendication 1, dans lequel on obtient l'adhésif en mélangeant un polyol et un isocyanate.

3. Procédé d'isolation thermique selon l'une quelconque des revendications 1 et 2, dans lequel on applique un film d'adhésif sur une épaisseur d'environ 100 microns.

4. Procédé d'isolation thermique selon l'une quelconque des revendications précédentes, dans lequel on projette la mousse de polyuréthanne de façon à obtenir une couche d'épaisseur comprise entre environ 10 mm et 15 mm.

5. Procédé d'isolation thermique selon l'une quelconque des revendications 1 à 4, dans lequel on applique l'adhésif sur ladite face par projection.

6. Procédé d'isolation thermique selon la revendication 5, dans lequel on projette l'adhésif au travers d'un pochoir.

7. Procédé d'isolation thermique selon l'une quelconque des revendications 1 à 4, dans lequel on applique l'adhésif sur ladite face à l'aide d'une spatule.

8. Procédé d'isolation thermique selon l'une quelconque des revendications précédentes, dans lequel on projette la mousse et, éventuellement, l'adhésif sous une atmosphère dont la température est régulée à 20°C±3°C.

9. Procédé d'isolation thermique selon l'une quelconque des revendications précédentes, dans lequel on projette la mousse et, éventuellement, l'adhésif sous une atmosphère dont l'hygrométrie est régulée à moins de 60%.
